# EUROPEAN PATENT SPECIFICATION

(11) **EP 4 027 433 B1**
(45) Date of publication and mention of the grant of the patent: **08.11.2023**
(21) Application number: 20930665.3
(22) Date of filing: 07.11.2020
(51) Int. Cl.: H01M 10/625, B60K 1/04, B60H 1/14, B60H 1/00, B60K 11/02, B60K 1/00, H01M 10/613, H01M 10/615, H01M 10/66, H01M 50/249, H01M 10/6554, H01M 50/204

(54) **ELECTRICAL DEVICE, METHOD FOR PREPARING ELECTRICAL DEVICE, AND APPARATUS FOR PREPARING ELECTRICAL DEVICE**
STROMVERBRAUCHSVORRICHTUNG, VERFAHREN ZUR HERSTELLUNG EINER STROMVERBRAUCHSVORRICHTUNG UND VORRICHTUNG ZUR HERSTELLUNG DER STROMVERBRAUCHSVORRICHTUNG
DISPOSITIF ÉLECTRIQUE, PROCÉDÉ DE FABRICATION D'UN DISPOSITIF ÉLECTRIQUE ET APPAREIL POUR LA FABRICATION D'UN DISPOSITIF ÉLECTRIQUE

(43) Date of publication of application: 13.07.2022
(73) Proprietor: Contemporary Amperex Technology Co., Limited, Ningde, Fujian 352100 (CN)
(72) Inventor: JIANG, Liwen, Nindge City, Fujian 352100 (CN); FANG,Wumei, Nindge City, Fujian 352100 (CN)
(74) Representative: Herrero & Asociados, S.L.
(86) International application number: PCT/CN2020/127373
(87) International publication number: WO 2022/094992

(56) References cited:
- CN-A- 102 088 108
- CN-A- 106 532 188
- CN-A- 109 367 438
- CN-A- 111 231 602
- DE-A1-102020 003 813
- IT-A1- BO20 090 015
- US-A1- 2002 043 413
- US-A1- 2009 078 400
- US-A1- 2012 003 910
- US-A1- 2016 325 598
- US-A1- 2018 013 105
- US-A1- 2018 145 381
- US-A1- 2020 076 029

## Description

### TECHNICAL FIELD

The present application relates to the technical field of batteries and particularly relates to a power consumption device, a method for manufacturing a power consumption device and an apparatus for manufacturing a power consumption device.

### BACKGROUND

Energy saving and emission reduction are keys for sustainable development of the automobile industry. In this case, a power consumption device has become an important part of the sustainable development of the automobile industry due to their advantages of energy conservation and environmental protection. For the power consumption device, a battery technology is an important factor for its development.

During the development of the battery technology, in addition to improving the performance of the battery, a problem of thermal management is also an issue that cannot be ignored. In related technologies, the battery of the electric automobile is assembled under a frame. The thermal management component of the battery is only used to adjust a temperature for the battery and adjustment of a temperature for a passenger compartment depends on an air conditioner of an entire vehicle. In this way, energy of the thermal management component cannot be utilized effectively, thus causing energy waste.

US20180145381A1 relates to techniques for implementing a cooling system for a vehicle heat-generating component wherein a two-phase coolant flows between a heat sink module and a heat radiator module. The heat radiator module can be mounted at a higher elevation within the vehicle than the heat sink module. High and low temperature fluid paths can fluidly couple the heat sink module and the heat radiator module. The heat sink module can be coupled to a heat-generating component.

As the coolant is heated at the heat sink module by heat from the heat-generating component, it can change to a substantially gaseous phase and move, primarily by force of buoyancy, to the heat radiator module via the high temperature fluid path. As the coolant is cooled by the heat radiator module, it can change to a substantially liquid phase and move, primarily by force of gravity, to the heat sink module.

### SUMMARY

The invention is set out in the appended set of claims.

### BRIEF DESCRIPTION OF DRAWINGS

To describe the technical solutions in the embodiments of the present application more clearly, the following briefly describes the accompanying drawings required for describing the embodiments of the present application. Apparently, the accompanying drawings in the following description show merely some embodiments of the present invention, and a person of ordinary skill in the art may still derive other combinations from these accompanying drawings within the scope of the appended claims
FIG. 1 is a schematic diagram of a vehicle in one embodiment of the present application;
FIG. 2 is a schematic structural diagram of a vehicle in one embodiment of the present application;
FIG. 3 is an installation diagram of a box and a passenger compartment in one embodiment of the present application (the box is located inside the passenger compartment);
FIG. 4 is an installation diagram of a box and a passenger compartment in another embodiment of the present application (the box is located outside the passenger compartment);
FIG. 5 is an exploded view of a box in one embodiment of the present application;
FIG. 6 is an installation diagram of a thermal management component and a bottom wall of a passenger compartment in one embodiment of the present application;
FIG. 7 is an installation diagram of a thermal management component and a side wall of a passenger compartment in one embodiment of the present application;
FIG. 8 is an installation diagram of a thermal management component and a top wall of a passenger compartment in one embodiment of the present application;
FIG. 9 is an installation diagram of a box body and a passenger compartment in one embodiment of the present application;
FIG. 10 is a schematic structural diagram on integrating a box and a frame in one embodiment of the present application;
FIG. 11 is an exploded view on integrating a box and a frame in one embodiment of the present application;
FIG. 12 is an exploded view of a box in another embodiment of the present application;
FIG. 13 is an assembling diagram of a heating element and a thermal management component in one embodiment of the present application;
FIG. 14 is a schematic structural diagram of a thermal management component in one embodiment of the present application;
FIG. 15 is a decomposition diagram of a box in another embodiment of the present application;
FIG. 16 is a schematic structural diagram of a box body in one embodiment of the present application;
FIG. 17 is a schematic flow chart of a method for manufacturing a power consumption device provided in one embodiment of the present application; and
FIG. 18 is a schematic block diagram of an apparatus for manufacturing a power consumption device provided in one embodiment of the present application.

Instructions to signs: 1-vehicle; 10-battery; 11-box; 111-thermal management component; 1110-body portion; 1111-extrusion portion; 1112-flow channel; 1113-fixing portion; 1114-undersealing plate; 1115-topsealing plate; 1116-first opening; 1117-second opening; 1118-third opening; 112-box body; 1121-groove; 12-battery cell; 20-motor; 30-controller; 40-passenger compartment; 41-bottom wall; 42-side wall; 43-top wall; 50-frame; 51-main cross beam; 52-main longitudinal beam; 53-base plate; 60-heating element; 800-apparatus for manufacturing a power consumption device; 801-providing module; and 802-assembly module.

### DESCRIPTION OF EMBODIMENTS

The following further describes the implementations of the present invention in detail with reference to the accompanying drawings and embodiments. Detailed description of the following embodiments and accompanying drawings are used to illustratively state the principles of the present invention, but not to limit the scope of the present invention, that is, the present invention is not limited to the embodiments described.

In the descriptions of the present application, it should be noted that unless otherwise described additionally, "plural" means more than two; and the orientations or positional relationships indicated by the terms "up", "down", "left", "right", "inside", "outside", and the like are merely intended to facilitate the descriptions of the present application and simplify the descriptions, but not intended to indicate or imply that the apparatuses or components mentioned must have specific orientations, or be constructed and operated for a specific orientation, and therefore shall not be understood as a limitation to the present application. In addition, the terms "first", "second" and "third" etc. are merely intended for a purpose of description, and shall not be understood as an indication or implication of relative importance. "Vertical" does not mean vertical in the strict sense, but to be vertical within a permitted range of an error. "Parallel" does not mean parallel in the strict sense, but to be parallel within a permitted range of an error.

The location words appearing in the following descriptions are all directions indicated in the drawings, but not to constitute any limitation to the specific structure of the present application. In the description of the present application, it should be further noted that unless otherwise prescribed and defined clearly, terms "installation", "communicating" and "connection" should be understood in a broad sense, which for example can be a fixed connection and can also be a detachable connection or an integral connection; or can be a direct connection and can also be a connection through an intermediary. A person of ordinary skill in the art can understand specific meanings of these terms in the present application based on specific situations.

The term "and/or" in the present application describes only an association relationship for describing associated objects and represents that three relationships may exist. For example, A and/or B may represent the following three cases: Only A exists, both A and B exist, and only B exists. In addition, the character "/" in this application generally indicates an "or" relationship between the associated objects.

In the present application, the battery cell can comprise a lithium-ion secondary battery, a lithium-ion primary battery, a lithium-sulfur battery, a sodium-lithium-ion battery, a sodium-ion battery or a magnesium-ion battery etc., which are not limited by embodiments of the present application. The battery cell can be of such shapes as a cylinder, a flat, a cuboid or other shapes, which are also not limited by embodiments of the present application. The battery cell is generally divided into three types according to a packaging manner: a column-shaped battery cell, a rectangle-shaped battery cell and a soft-package battery cell, which are also not limited in embodiments of the present application.

The battery mentioned in embodiments of the present application refers to a single physical module including one or more battery cells to provide higher voltage and capacity. For example, the battery mentioned in the present application can include a battery module or a battery pack etc. The battery generally includes a box for packaging one or more battery cells. The box can prevent liquid or other foreign material affecting charging or discharging of the battery cell.

The battery cell includes an electrode assembly and an electrolytic solution, the electrode assembly includes a positive electrode piece, a negative electrode piece and a separator. The battery cell mainly works by depending on movement of a metal ion between the positive electrode piece and the negative electrode piece. The positive electrode includes a positive electrode current collector and a positive electrode active substance layer, the positive electrode active substance layer being coated on a surface of the positive electrode current collector. The current collector without being coated with the positive electrode active substance layer protrudes outside the current collector coated with the positive electrode active substance layer and the current collector without being coated with the positive electrode active substance layer is a positive tab. With the lithium-ion battery as an example, the material of the positive electrode current collector can be aluminum and the positive electrode active substance can be lithium cobalt oxide, lithium iron phosphate, ternary lithium or lithium manganate etc. The negative electrode piece includes a negative electrode current collector and a negative electrode active substance layer, the negative electrode active substance layer being coated on a surface of the negative electrode current collector. The current collector without being coated with the negative electrode active substance layer protrudes outside the current collector coated with the negative electrode active substance layer and the current collector without being coated with the negative electrode active substance layer is a negative tab. The material of the negative electrode current collector can be copper and the negative electrode active substance can be carbon or silicon etc. In order to ensure pass of big current without occurrence of fusing, there are a plurality of positive tabs, which are stacked together, and there are a plurality of negative tabs, which are stacked together. The material of the separator can be PP or PE etc. In addition, the electrode assembly can be of a coiled structure and can also be of a laminated structure, which are not limited by embodiments of the present application.

The box mentioned in embodiments of the present invention is an internal hollow structure, that is, the box includes an accommodating chamber to accommodate a plurality of battery cells and converging components. The accommodating chamber provides an installation space for the battery cells and converging components. In some embodiments, a structure for fixing the battery cells can be further provided in the accommodating chamber. The shape of the accommodating chamber can be determined according to the plurality of accommodated battery cells and converging components to be accommodated. In some embodiments, the accommodating chamber can be of a rectangle, having six walls. The battery cell is packaged in the accommodating chamber of the box, and the battery cell is easy to generate heat in a working process, thus increasing a temperature inside the accommodating chamber. In order to ensure normal work of the battery cell, the battery further includes a thermal management component, where the thermal management component is configured to adjust a temperature for the battery cell. For example, when the temperature for the battery cell is high, the battery cell should be cooled down; and when the temperature of the battery cell is low, the battery cell should be heated up.

The passenger compartment mentioned in embodiments of the present application includes an accommodating space, the accommodating space can accommodate passengers and can also accommodate goods. Seats are generally provided in the passenger compartment for passengers to take, thereby improving comfort of passengers. When passengers or goods are located in the accommodating space, the temperature of the accommodating space can affect comfort of passengers or quality of goods. The passenger compartment is generally provided with an air conditioning system, through which a temperature for the passenger compartment is adjusted. In related techniques, the thermal management component of the battery only manages adjustment of a temperature for the battery, with a single function. However, adjustment of a temperature for a passenger compartment depends on an air conditioner of an entire vehicle. The air conditioner and the thermal management component of the battery are two mutually independent systems. Energy of the thermal management component cannot be utilized effectively, thus causing energy waste. In view of this, the present application provides a technical solution in which the thermal management component is configured to adjust a temperature for the battery cell and the passenger compartment. The battery cell and the passenger compartment share the thermal management component for adjustment of temperature, thereby realizing reasonable utilization of energy and reducing energy waste.

The thermal management component is configured to accommodate fluid to adjust a temperature for a component to be managed (for example a battery cell). Fluid here can be liquid or gas and adjustment of a temperature means to heat up or cool down a component to be managed. In a case where the component to be managed is cooled down or has a temperature decreased, the thermal management component is configured to accommodate cooling fluid to decrease a temperature for the component to be managed. At this time, the thermal management component can also be known as a cooling component, a cooling system or a cooling plate etc., and the fluid accommodated therein can also be known as a cooling medium or a cooling fluid; more specifically as a cooling liquid or a cooling gas. In addition, the thermal management component can also be configured to heat up to the component to be managed, which is not limited herein by embodiments of the present application. Optionally, the fluid can circulate to flow to achieve a better effect in adjusting a temperature. Optionally, the fluid can be water, a mixture of water and ethylene glycol or air etc.

The technical solution described in embodiments of the present application is applicable various apparatuses using the battery, such as an electric vehicle, a ship and a spacecraft etc. For example, the spacecraft includes an air plane, a spaceship and a space vehicle etc.

It should be understood that the technical solution described in embodiments of the application is not only applicable to the device described above, but also applicable to all devices using the battery and the passenger compartment. However, for simplified description, the following embodiments are described by taking an electric vehicle as an example.

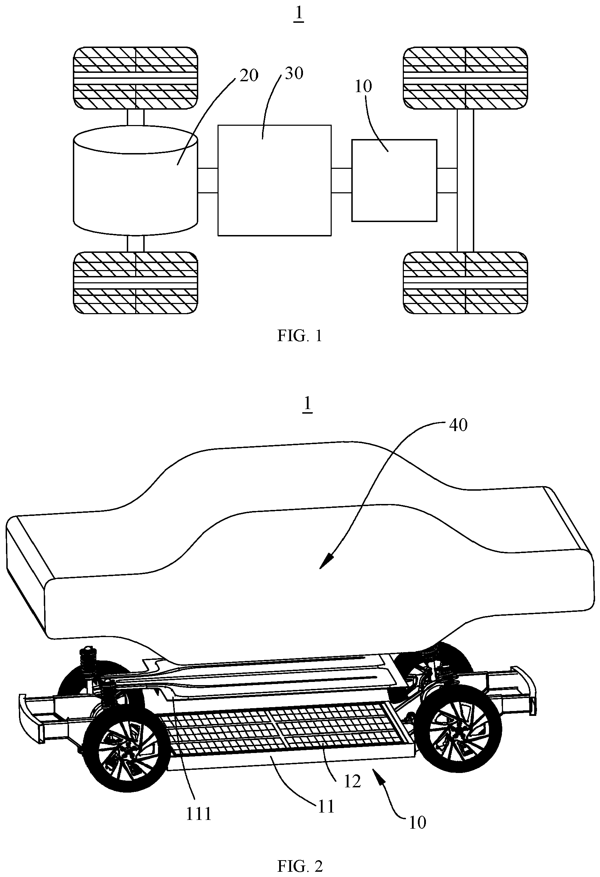

For example, FIG. 1 shows a schematic structural diagram of a vehicle 1 in one embodiment of the present application and the vehicle 1 can be a fuel-engined automobile, a fuel gas automobile or a new energy automobile, and the new energy automobile can be a pure electric automobile or a hybrid power automobile or an extended-range automobile etc. The vehicle 1 may include a battery 10, a motor 20 and a controller 30, where the controller 30 is configured to control the battery 10 to power the motor 20. For example, the bottom or head or tail of the vehicle 1 can be provided with a battery 10. The battery 10 can be configured to power the vehicle 1. For example, the battery 10 can serve as an operating power supply of the vehicle 1, for a circuit system of the vehicle 1, for example, for requirements of electricity for work upon starting, navigating and running the vehicle 1. In another embodiment of the present application, the battery 10 can not only serve as an operating power supply of the vehicle 1, but also serve as a driving power supply of the vehicle 1, thereby replacing or partially replacing fuel oil or natural gas to provide a driving power for the vehicle 1.

In order to satisfy different requirements of using electricity, the battery 10 can comprise a plurality of battery cells, where the plurality of battery cells can be in series connection or parallel connection or series-parallel connection, and the series-parallel connection refers to mixing of series connection and parallel connection. The battery can also be known as a battery pack. Optionally, a plurality of battery cells can be firstly connected in series or in parallel or in series-parallel manner to form a battery module, and a plurality of battery modules are then connected in series or in parallel or in series-parallel manner to form a battery. That is, a plurality of battery cells can directly form the battery 10 and can also form the battery module firstly and then the battery module then forms the battery.

Optionally, the battery 10 can further comprise a converging component, where the converging component is configured to realize an electrical connection between a plurality of battery cells, for example, series connection or parallel connection or series-parallel connection. Specifically, the converging component can realize an electrical connection between battery cells through an electrode terminal connecting the battery cells. Further, the converging component can be fixed to an electrode terminal of the battery cells through welding. Electrical energy of the plurality of battery cells can be further led out through a conductive mechanism. Optionally, the conductive mechanism can also belong to the converging component.

The battery cell includes one or more battery assemblies, a housing and a cover plate. The housing and the cover plate form a shell or a battery box. A wall of the housing and the cover plate are known as walls of the battery cell. The housing is determined according to a combined shape of one or more electrode assemblies. For example, the shell can be a hollow cuboid or cube or cylinder and one surface of the housing has an opening, such that one or more electrode assemblies can be placed in the housing. For example, when the housing is a hollow cuboid or cube, one plane of the housing is an opening surface, that is, the plane does not have a wall body, thus enabling the housing to be the same inside and outside. The cover plate covers the opening and is connected to the housing to form a closing chamber in which electrode assemblies are placed. Electrolyte is filled in the housing, such as electrolytic solution.

The battery cell can further include two electrode terminals, where the two electrode terminals can be provided on the cover plate. The cover plate is generally of a flat shape. The two electrode terminals are fixed to a flat surface of the cover plate and the two electrode terminals are respectively a positive electrode terminal and a negative electrode terminal. Each electrode terminal is correspondingly provided with a connecting mechanism or can also be known as a collecting component, which is located between the cover plate and the electrode assembly for realizing an electrical connection between the electrode assembly and the electrode terminal.

FIG. 2 shows a schematic structural diagram of a vehicle 1 in one embodiment of the present application, where the vehicle 1 further includes a passenger compartment 40, the passenger compartment 40 is capable of accommodating passengers for passengers to take or carrying goods. The battery 10 can comprise a box 11 and the plurality of battery cells 12, where the box 11 is a hollow structure inside and a plurality of battery cells 12 are accommodated in the box 11. The box 11 can include a thermal management component 111, where the thermal management component 111 is configured to accommodate fluid to adjust a temperature for the battery cell 12 and the passenger compartment 40.

The passenger compartment 40 includes a compartment wall, the compartment wall enclosing an accommodating space for accommodating passengers or goods. For example, the vehicle body, the floor, the windows, the doors, and the dashboard of the vehicle 1 are generally known as the compartment wall of the passenger compartment 40. For example, the windows can include a front window, a rear window, a left front window, a left rear window, a right front window, and a right rear window; and the floor is configured to cover over the frame to support passengers or carry goods. The temperature of the accommodating space can affect comfort of passengers or quality of goods. Therefore, the passenger compartment 40 needs the thermal management component 111 to adjust the temperature.

The box 11 is a hollow structure inside, and the box 11 includes an accommodating chamber, into which a plurality of battery cells 12 are accommodated. The box 11 can include two parts, known as a first part and a second part respectively here. The first part and the second part are snap-fit together to limit the accommodating chamber. The shape of the first part and the second part can be determined according to the shape of a plurality of battery cells 12 combined, and at least one of the first part and the second part has an opening. For example, the first part can be a hollow cuboid and one surface thereof is an opening surface. The openings of the second part and the first part are relatively provided and the first part and the second part are snap-fit to form a box 11 having a closing chamber. After being put in series connection or parallel connection or series-parallel connection to each other, the plurality of battery cells 12 are formed in the box 11 after being placed in the first part and the second part for being snap-fit. The thermal management component 111 can be the second part or other component can be the second part, and the thermal management component 111 is fixed to the second part.

The thermal management component 111 is configured to accommodate fluid to adjust a temperature for the battery cell 12 and the passenger compartment 40. In a case where the battery cell 12 and the passenger compartment 40 are cooled down, the thermal management component 111 can accommodate a cooling medium to adjust the temperature for the battery cell 12 and the passenger compartment 40. At this time, the thermal management component 111 can also be known as a cooling component, a cooling system or a cooling plate etc. In addition, the thermal management component 111 can also be configured to heat up, which is not limited herein by embodiments of the present application. Optionally, the fluid can circulate to flow to achieve a better effect in adjusting a temperature.

According to the invention, the temperature is adjusted for the battery cell 12 and the passenger compartment 40 through the thermal management component 111. The battery cell 12 and the passenger compartment 40 share the thermal management component 111, thereby saving the number of the thermal management component 111. When the thermal management component 111 cools down the battery cell 12, the thermal management component 111 is also capable of cooling down the passenger compartment 40. When the thermal management component 111 heats up the battery cell 12, the thermal management component 111 is also capable of heating up the passenger compartment 40. The above operation realizes reasonable use of energy, thereby reducing waste of energy.

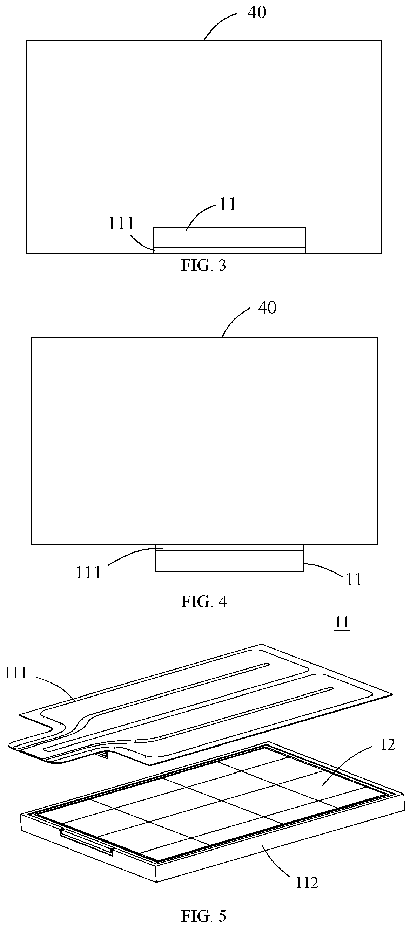

The box 11 can be located inside the passenger compartment 40 and can also be located outside the passenger compartment 40 to ensure the thermal management component 111 to adjust the temperature for the battery cell 12 and the passenger compartment 40. FIG. 3 shows an installation diagram of a box 11 and a passenger compartment 40 in one embodiment of the present application (the box 11 is located inside the passenger compartment 40). In FIG. 3, the box 11 is located inside the passenger compartment 40. In such a structure, the thermal management component 111 can perform heat exchange through air inside the passenger compartment 40 to adjust the temperature for the passenger compartment 40. FIG. 4 shows an installation diagram of a box 11 and a passenger compartment 40 in one another embodiment of the present application (the box 11 is located outside the passenger compartment 40). In FIG. 4, the box 11 is located outside the passenger compartment 40. In such a structure, the thermal management component 111 can perform heat exchange through air inside the compartment wall and the passenger compartment 40 to adjust the temperature for the passenger compartment 40 and prevent the box 11 from occupying space of the passenger compartment 40.

According to the invention, the thermal management component 111 is in respective heat conducting connections to the battery cell 12 and the compartment wall of the passenger compartment 40 (for convenient description, the compartment wall of the passenger compartment 40 is abbreviated as the compartment wall), to simultaneously adjust the temperature for the battery cell 12 and the passenger compartment 40. Or the thermal management component 111 is in a heat conducting connection to the battery cell 12, and the thermal management component 111 is formed as a part of the compartment wall to simultaneously adjust the temperature for the battery cell 12 and the passenger compartment 40. It should be pointed out that the heat conducting connection can be a direct bonding contact and can also be a connection through a heat conducting piece. For example, since the thermal management component 111 is capable of transferring heat, when the thermal management component 111 is in direct bonding contact with the battery cell 12 or the compartment wall of the passenger compartment 40, the thermal management component 111 is capable of realizing rapid exchange of heat with the battery cell 12 or the compartment wall. For another example, the heat conducting piece can be a heat conducting adhesive and a heat conducting metal (such as copper, aluminum or other alloy) etc. With the aid of the heat conducting piece's characteristic in fast conducting of heat, rapid exchange of heat between the thermal management component 111 and the battery cell 12 or the compartment wall can be realized. The heat conducting connection can realize rapid conducting of heat, thereby improving heat exchange efficiency.

The thermal management component 111 simultaneously adjusts the temperature for the battery cell 12 and the passenger compartment 40, thereby improving utilization ratio of energy and reducing energy consumption. When the thermal management component 111 is formed as a part of a compartment wall of the passenger compartment 40, the thermal management component 111 can directly act as a part of a compartment wall of the passenger compartment 40 such that the thermal management component 111 directly manages the temperature for the passenger compartment 40, thereby saving space occupied for installation.

FIG. 5 shows an exploded view of a box 11 in one embodiment of the present invention. In some embodiments, as shown in FIG. 5, the box body 11 further includes a box body 112 having an opening, and the box body 112 is understood as a first part, and the thermal management component 111 as a second part, and the thermal management component 111 is configured to cover the opening. The accommodating chamber is provided in the box body 112 and the accommodating chamber is a semi-closed chamber having an opening in communication with the exterior so that through the opening, the battery cell 12 is placed in the accommodating chamber. The thermal management component 111 covers the opening, and the box body 112 and the thermal management component 111 enclose a closing chamber, the closing chamber being configured to accommodate the battery cell 12. In some other embodiments of the present application, the chamber enclosed by the thermal management component 111 and the box body 112 may not be closed. For example, a baffle plate can be provided between the thermal management component 111 and the battery cell 12. Through the baffle plate, the battery cell 12 is closed in the accommodating chamber. The thermal management component 111 is provided at the baffle plate and is in a heat conducting connection to the baffle plate. The baffle plate has a very favorable heat conducting performance, thereby facilitating conducting of heat.

Since the box body 112 has an opening, it facilitates to accommodate the battery cell 12 in the box body 112. The thermal management component 111 covers the opening and the opening is capable of enclosing a closing chamber with the box body 112 to package the battery cell 12, so as to facilitate the thermal management component 111 to adjust the temperature for the battery' cell 12, resulting in reasonable utilization of energy and reduction of energy waste. The thermal management component 111 and the box 112 enclose a closing chamber to ensure heat exchange efficiency between the thermal management component 111 and the battery cell 12 and prevent waste of energy. Meanwhile, external impurities cannot enter the closing chamber to affect heat conducting efficiency.

The thermal management component 111 can be in a heat conducting connection to any proper position of a compartment wall or formed as a part of a compartment wall of any position.

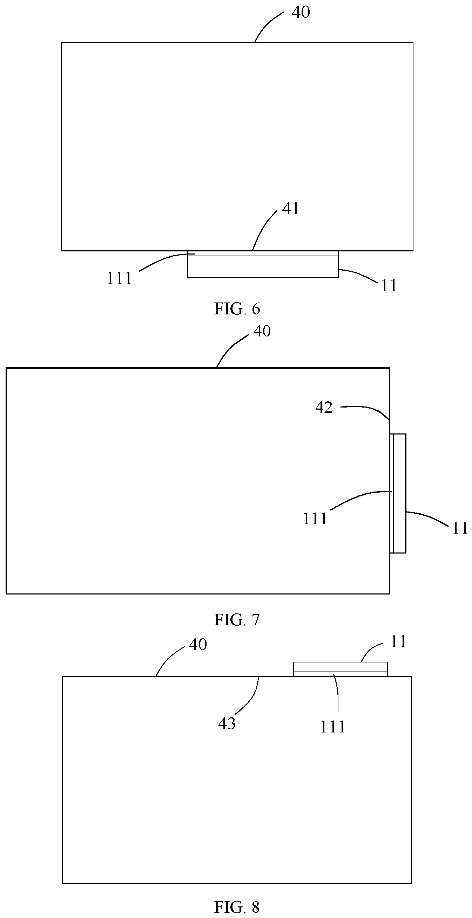

Optionally, in some embodiments, FIG. 6 shows an installation diagram of a thermal management component and a bottom wall 41 of a passenger compartment 40 in one embodiment of the present application, where the compartment wall includes a bottom wall 41, and the thermal management component 111 can be in a heat conducting connection to the bottom wall 41 of the passenger compartment 40. The bottom wall 41 can generally be understood as a floor of the passenger compartment 40 for passengers to step on and support for the passengers or carry goods. Seats can be provided on the bottom wall 41 for passengers to take and other structures can also be provided to install other components. Optionally, the thermal management component 111 can be formed as at least one part of the bottom wall 41, that is, the thermal management component 111 can be integrated with the bottom wall 41 into a whole, thereby saving materials and space occupied.

In some other embodiments, as shown in FIGS. 7 and 8, according to different positions, the compartment wall can further includes a side wall 42 and a top wall 43. FIG. 7 shows an installation diagram of a thermal management component 111 and a side wall 42 of a passenger compartment 40 in one embodiment of the present application. In FIG. 7, the thermal management component 111 can be in a heat conducting connection to the side wall 42 of the passenger compartment 40 or formed as at least one part of the side wall 42. FIG. 8 shows an installation diagram of a thermal management component 111 and a top wall 43 of a passenger compartment 40 in one embodiment of the present application. In FIG. 8, the thermal management component 111 can be in a heat conducting connection to the top wall 43 of the passenger compartment 40 or formed as at least one part of the top wall 43.

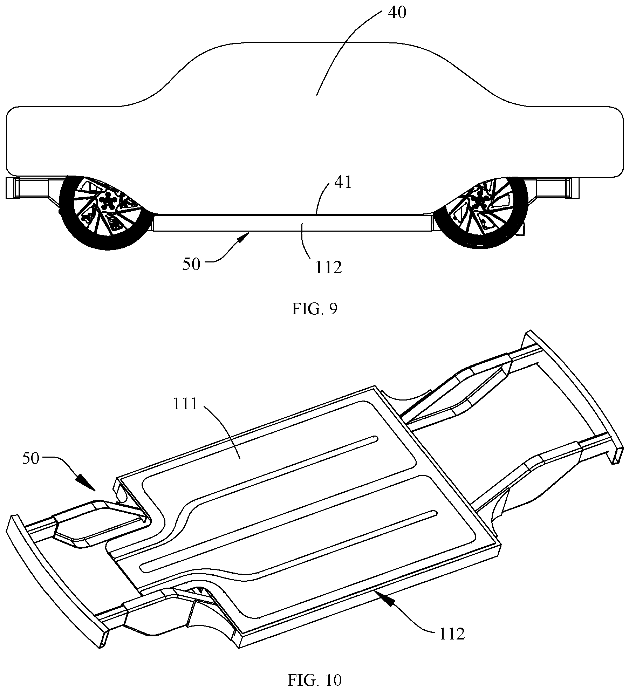

Optionally, in some embodiments, FIG. 9 shows an installation diagram of a box body 112 and a passenger compartment 40 in one embodiment of the present application. In FIG. 9, the box body 112 can be located under the bottom wall 41, that is, the box body 112 is entirely located under the passenger compartment 40, resulting in reasonable use of installation space and reduction of space occupied by the passenger compartment 40. Moreover, it can also prevent the battery cell from affecting the temperature for the passenger compartment 40, thus affecting effects of the thermal management component 111 in adjusting temperature.

Optionally, after the thermal management component 111 is formed as at least one part of the bottom wall 41, a minimum spacing of the bottom wall 41 and the battery cell 12 is greater than or equal to 10cm, for example, 10cm, 12cm, 15cm, 17cm, 20cm, 25cm, 30cm, 35cm, 40cm and 50cm. When an electrode terminal of the battery cell 12 is located over the entire battery cell 12, at this time, a minimum spacing of the integrated bottom wall 41 and the battery cell 12 is a minimum distance of the bottom wall 41 to the electrode terminal of the battery cell 12. As the bottom wall 41 is configured to carry goods or passengers, a certain buffering space is required between the bottom wall 41 and the battery cell 12 to prevent the bottom wall 41 from pressing the battery cell 12 due to its deformation, thus causing a security problem.

Optionally, in some embodiments, FIG. 10 shows a schematic structural diagram on integrating a box 11 and a frame 50 in one embodiment of the present application. In FIGS. 9 and 10, the vehicle 1 further includes a frame 50, and the frame 50 is located at a bottom of the passenger compartment 40. The box body 112 can be installed on the frame 50 or as a part of the frame 50. It can be understood that the box body 112 is combined into one with the battery and the frame 50, which not only facilitates the thermal management component 111 to adjust the temperature for the passenger compartment 40, but also reduce the number of structural pieces in a conventional battery, thereby saving cost. Regarding the manners of installing the box body 112 and the frame 50, the box body 112 can be directly welded and rivet-connected to the frame 50. Further, the box body 112 and the frame 50 can be connected through a thread piece. Moreover, a connecting piece can be connected for the box body 112, and the connecting piece and the frame 50 are connected through the thread piece.

It should be pointed out that when the battery is integrated to the frame 50, the thermal management component 111 can be installed to the frame 50 or as a part of the frame 50 and when the thermal management component 111 is installed to the frame 50, the thermal management component 111 can be in a heat conducting connection to the frame 50.

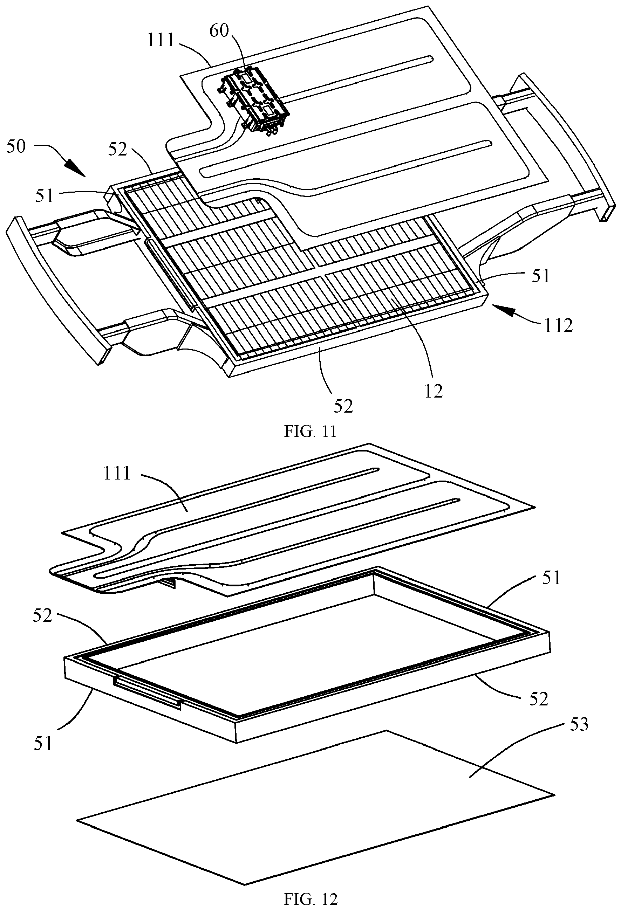

FIG. 11 shows an exploded view on integrating a box 11 and a frame 50 in one embodiment of the present application; and FIG. 12 shows an exploded view of a box 11 in another embodiment of the present application. In FIGS. 11 and 12, the frame 50 can include two main cross beams 51, two main longitudinal beams 52 and a base plate 53, where the two main cross beams 51, the two main longitudinal beams 52 and the base plate 53 enclose the box body 112, and the battery cell 12 is placed in the frame 50, thereby improving an overall ground clearance of the battery 10 and reducing the space occupied by the battery 10. The two main cross beams 51 and the two main longitudinal beams 52 constitute a skeleton of the frame 50, which performs a function of supporting the entire vehicle. The main cross beams 51 and the main longitudinal beams 52 have a great bearing force, thereby improving security of the battery 10. It should be pointed out that the main cross beams 51 mentioned in embodiments of the present application refers to a beam that extends in a left-right direction of the vehicle 1 and the so-called left-right direction is a direction perpendicular to a wheel base direction of the front wheel and the rear wheel of the vehicle 1; and the main longitudinal beams 52 refers to a beam that extends along a front-rear direction of the vehicle 1, and the so-called front-rear direction is a direction parallel with a wheel base direction of the front wheel and the rear wheel of the vehicle 1. When the base plate 53 encloses a box body 112 with the two main cross beams 51 and the two main longitudinal beams 52, the base plate 53 can protrude outside a bottom end surface of the main cross beams 51 and the main longitudinal beams 52; or a bottom surface of the base plate 53 is flush with a bottom end surface of the main cross beams 51 and the main longitudinal beams 52; or a bottom surface of the base plate 53 is concaved into a chamber enclosed by the main cross beams 51 and the main longitudinal beams 52. The base plate 53 is sealingly connected to the two main cross beams 51 and the two longitudinal beams 52 or integratively molded therewith to ensure sealing effects of the box body 112. For example, a connecting point of the base plate 53 with the main cross beams 51 and the main longitudinal beams 52 can be provided with a sealing element to ensure sealing effects of the box body 112; and the sealing element can be a sealing gasket or a sealing gum.

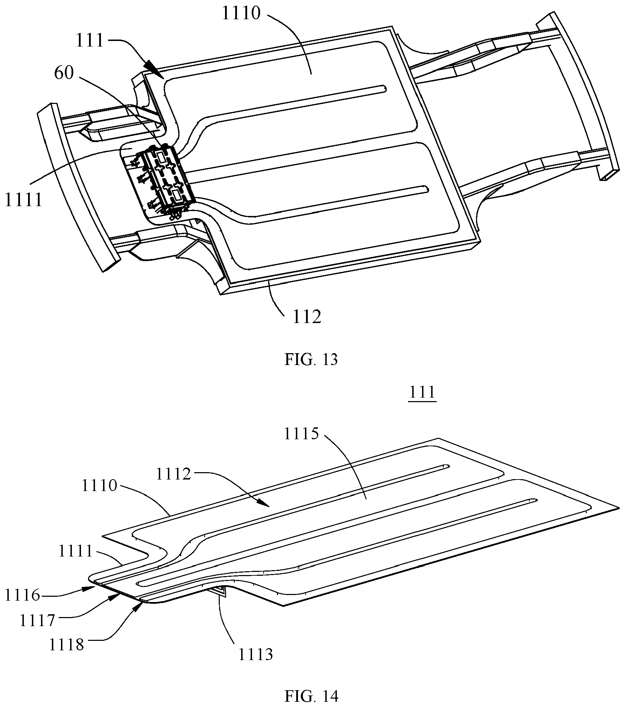

Optionally, in some embodiments, FIG. 13 shows an assembling diagram of a heating element 60 and a thermal management component 111 in one embodiment of the present application; and FIG. 14 shows a structural diagram of a thermal management component 111 in one embodiment of the present application. In FIG. 13, the vehicle 1 can further include a heating element 60, where the heating element 60 is a component that generates heat when the vehicle 1 is working. In FIG. 14, the thermal management component 111 includes a body portion 1110 and an extrusion portion 1111, where the body portion 1110 is configured to enclose a closing chamber with the box body 112 and the extrusion portion 1111 is configured to protrude out of a peripheral wall of the box body 112, that is, the extrusion portion 1111 extends toward a direction of a peripheral wall of the box body 112 deviating from the battery cell 12. The extrusion portion 1111 and the body portion 1110 are connected or integratively molded, and the extrusion portion 1111 can be located at one end or one side of the body portion 1110, for example, the extrusion portion 1111 can be located at one of a front end and a rear end of the body portion 1110; or the extrusion portion 1111 can be located at one of a left side and a right side of the body portion 1110 and the extrusion portion 1111 can also be located at two opposite ends or sides of the body portion 1110; and the extrusion portion 1111 is attached to the heating element 60 to adjust the temperature for the heating element 60. Attaching means laminating or connecting. For example, the heating element 60 may bond the extrusion portion 1111 or the heating element 60 can connect to the extrusion portion 1111.

In the vehicle 1, the peripheral wall of the box body 112 can be understood as a general name of the main cross beams 51 and the main longitudinal beams 52. For example, the extrusion portion 1111 can protrude outside the main cross beams 51 along a direction of the main cross beams 51 deviating from the battery cell 12, or the extrusion portion 1111 can protrude outside the main longitudinal beams 52 along a direction of the main longitudinal beams 52 deviating from the battery cell 12. The front and rear ends of the body portion 1110 mentioned in the present application refer to an end portion of the body portion 1110 in a front-rear direction of the vehicle 1 and the left and right sides of the body portion 1110 refer to a side surface of the body portion 1110 in a left-right direction of the vehicle 1.

When the thermal management component 111 cools down the battery cell 12 and the passenger compartment 40, the extrusion portion 1111 is capable of cooling down the heating element 60 to ensure normal work of the heating element 60 and prevent providing the thermal management component 111 separately for the heating element 60, thereby saving cost. When it is necessary to heat the passenger compartment 40 and the battery cell 12, the heat generated by the heating element 60 is conducted to the thermal management component 111 and conducted to the passenger compartment 40 and the battery cell 12 through fluid accommodated in the thermal management component 111, thus performing a function of decreasing the temperature for the heating element 60.

The extrusion portion 1111 and the body portion 1110 constitute a carrier of a flow channel 1112. In order to ensure overall strength of the carrier, the extrusion portion 1111 and the body portion 1110 can be integratively molded.

According to different positions of the heating element 60, the extrusion portion 1111 can protrude outside from a front end of the box body 112 and can also protrude outside from a rear end of the box body 112 and can also protrude outside from a left side surface of the box body 112 and can also protrude outside from a right side surface of the box body 112. In other embodiments, the extrusion portion 1111 can also protrude outside from front and rear ends of the box body 112 or the extrusion portion 1111 can also protrude outside from left and right side surfaces of the box body 112.

In order to improve energy density, the extrusion portion 1111 can protrude outside from a front end or a rear end of the box body 112 to prevent the extrusion portion 1111 from protruding outside from left and right side surfaces of the frame 50, thus affecting space of the box body 112 in a left-right direction of the vehicle 1. When the extrusion portion 1111 protrudes outside from a front end or a rear end of the box body 112, the box body 112 can extend to the main longitudinal beams 52 in a left-right direction of the vehicle 1, so as to maximize available space of the box body 112 in a left-right direction of the vehicle 1.

Optionally, as shown in FIGS. 11 and 13, the extrusion portion 1111 can protrude outside from a front end of the box body 112 and the heating element 60 is located at a front end of the frame 50. It can be understood as that the extrusion portion 1111 extends toward the head of the vehicle 1 from the front end of the body portion 1110, and the extrusion portion 1111 protrudes out of the box body 112 from the front end of the main cross beam 51 close to the head of the vehicle 1. The head of the vehicle 1 refers to a front portion of the vehicle 1 in a heading direction and the tail of the vehicle 1 refers to a rear portion of the vehicle 1 in a heading direction. The front-rear direction of the box body 112 mentioned in embodiments of the present application corresponds to the front-rear direction of the vehicle 1 and the left-right direction of the box body 112 corresponds to the left-right direction of the vehicle 1.

Optionally, in some embodiments, the fluid in the thermal management component 111 is circulating fluid, and an inlet and an outlet of the flow channel 1112 for the circulating fluid are provided at the extrusion portion 1111 to facilitate a connection between the thermal management component 111 and a fluid source, and the fluid source can be a reservoir tank with a water pump.

In FIG. 14, the flow channel 1112 may include a first opening 1116, a second opening 1117 and a third opening 1118, where the first opening 1116, the second opening 1117 and the third opening 1118 are all located at a front end of the extrusion portion 1111, and the second opening 1117 is located between the first opening 1116 and the third opening 1118. The flow channel 1112 can be divided into two parts: a first flow channel section (not shown in the drawing) and a second flow channel section (not shown in the drawing). The first flow channel section communicates to the second flow channel section through the second opening 1117, the first opening 1116 communicates to the first flow channel section and the third opening 1118 communicates to the second flow channel section. The geometric central lines of the first flow channel section and the second flow channel section along the front-rear direction of the thermal management 111 are symmetrically distributed, that is, the first flow channel section and the second flow channel section are located at left and right sides of the thermal management component 111. When the first opening 1116 and the third opening 1118 are the inlet, the second opening 1117 is the outlet; and when the second opening 1117 is the inlet, the first opening 1116 and the third opening 1118 are the outlet. It should be pointed out that the front-rear direction of the thermal management component 111 is consistent with the front-rear direction of the vehicle 1.

Optionally, upon cooling, the circulating fluid enters the flow channel 1112 from the first opening 1116 and the third opening 1118 and the circulating fluid flows outside from the second opening 1117, and the thermal management component 111 simultaneously cools the battery cell 12, the passenger compartment 40 and the heating element 60. Upon heating, the circulating fluid enters the flow channel 1112 from the second opening 1117, and the circulating fluid flows outside from the first opening 1116 and the third opening 1118. In the path, the fluid can firstly absorb heat of the heating element 60 and then use the heat for heating the battery cell 12 and the passenger compartment 40, thereby realizing recycled use of the heat.

In some embodiments, an opening area of the second opening 1117 is respectively greater than an opening area of the first opening 1116 and the third opening 1118, such that fluid of the first flow channel section and the second flow channel section diverges or converges at the second opening 1117. As the first flow channel section and the second flow channel section diverge or converge at the second opening 1117, the second opening 1117 with a greater opening area is capable of realizing fast flow of fluid to the first flow channel section and the second flow channel section at the second opening 1117 or fluid flowing outside from the first flow channel section and the second flow channel section converges at the second opening 1117.

In order to ensure stability of a connection between the box body 112 and the thermal management component 111, the box 112 and the thermal management component 111 are connected and fixed with welding or rivet connection manners. Since the interior of the thermal management component 111 is provided with a flow channel 1112 supplied for fluid to flow through, a connecting point of the thermal management component 111 and the box body 112 needs to give way to the flow channel 1112. In addition, since the flow channel 1112 flows through an intersection of the extrusion portion 1111 and the body portion 1110, when the thermal management component 111 and the box body 112 are connected, if a converging point of the extrusion portion 1111 and the body portion 1110 is welded or rivet-connected to the box body 112, it is easy to cause damage to the flow channel 1112.

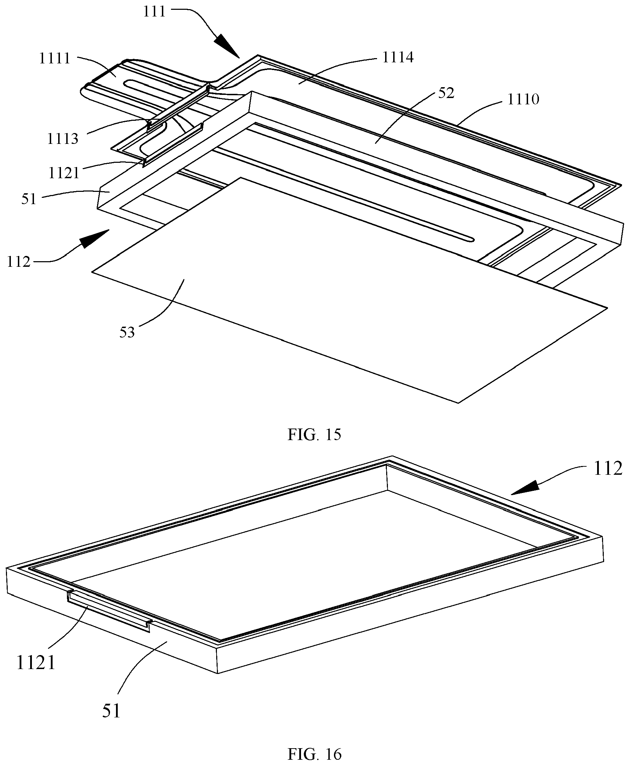

FIG. 15 shows an exploded view of a box 11 in another embodiment of the present application. Optionally, in some embodiments, in FIGS. 14 and 15, the thermal management component 111 further includes a fixing portion 1113, the fixing portion 1113 is provided at an intersection between the body portion 1110 and the extrusion portion 1111 and extends in a direction perpendicular to the body portion 1110 and/or the extrusion portion 1111, for example, the fixing portion 1113 can protrude outside the body portion 1110 along a direction of the body portion 1110 toward the battery cell 12, and the thermal management component 111 is connected to a peripheral wall of the box body 112 through the fixing portion 1113. When the fixing portion 1113 is provided at an intersection of the extrusion portion 1111 and the body portion 1110, it can be understood that the fixing portion 1113 is located at an end portion of the extrusion portion 1111 close to the body portion 1110 and simultaneously located at an end portion of the body portion 1110 close to the extrusion portion 1111.

Optionally, the fixing portion 1113 is welded to a peripheral wall of the box body 112 to ensure solidity of a connection between the thermal management component 111 and the box body 112. In other embodiments of the present application, the fixing portion 1113 can be connected to a peripheral wall of the box body 112 in such manners as rivet connection, bonding and the like. The fixing portion 1113 provided facilitates realization of welding of the thermal management component 111 to the box body 112 to prevent an intersection of the body portion 1110 and the extrusion portion 1111 from being directly welded to the box body 112, resulting in penetration at the intersection and damage to the thermal management component 111.

Optionally, FIG. 16 shows a structural diagram of a box body 112 in one embodiment of the present application. In FIGS. 15 and 16, a peripheral wall of the box body 112 is provided with a groove 1121 corresponding to the fixing portion 1113, the groove 1121 is located at a peripheral wall of the main cross beams 51 located at a front end of the box body 112, and the fixing portion 1113 is configured to be embedded into the groove 1121. The fixing portion 1113 is welded to a wall of the groove 1121 to ensure solidity of a connection between the thermal management component 111 and the box body 112. The fixing portion 1113 is embedded in a groove 1121, thereby saving installation space.

As shown in FIGS. 14 and 15, according to different structural division manners, the thermal management component 111 can include an undersealing plate 1114 and a topsealing plate 1115 that are provided opposite to each other, the undersealing plate 1114 is provided toward the battery cell 12, the topsealing plate 1115 is provided departed from the battery cell 12, the undersealing plate 1114 and the topsealing plate 1115 enclose a flow channel 1112, the undersealing plate 1114 and the topsealing plate 1115 form the above carrier, and the fixing portion 1113 is located at a base surface of the undersealing plate 1114, i.e. facing toward one surface of the battery cell 12.

The thermal management component 111 is assembled as follows: before the undersealing plate 1114 and the topsealing plate 1115 are assembled, the fixing portion 1113 is firstly welded to the undersealing plate 1114, or fixed to the undersealing plate 1114 through other manners, such as a thread connection, a rivet connection, bonding and other manners. The fixing portion 1113 can also be integratively molded with the undersealing plate 1114 to ensure solidity of a connection between the fixing portion 1113 and the undersealing plate 1114. After the fixing portion 1113 and the undersealing plate 1114 are connected or integratively molded, then the undersealing plate 1114 is connected to the topsealing plate 1115 to form a flow channel 1112. In this way, the assembling of the thermal management component 111 is completed.

When the thermal management component 111 and the box body 112 are assembled, the body portion 1110 covers over the box body 112, a position of the body portion 1110 close to an edge is welded to the box body 112, and the fixing portion 1113 and the groove 1121 cooperate and are welded to a peripheral wall of the box body 112 into one. In order to increase an area of the flow channel 1112, the profile of the flow channel 1112 extends toward an edge of the body portion 1110 as much as possible. At this time, a position at which the body portion 1110 and the box body 112 contact each other is covered with a part of the flow channel 1112. When the body portion 1110 and the box body 112 are welded, it is necessary to give way to the flow channel 1112 to prevent damage to the flow channel 1112.

It should be pointed out that a size of the fixing portion 1113 in a length direction is the same as a size of the extrusion portion 1111 in a width direction; or a size of the fixing portion 1113 in a length direction is smaller than a size of the extrusion portion 1111 in a width direction. The width direction of the extrusion portion 1111 here can be understood as a left-right direction of the vehicle 1 and the length direction of the fixing portion 1113 is parallel with the width direction of the extrusion portion 1111.

It should be pointed out that the heating element 60 can be a high power component and high heat is generated during its work, for example, BDU (Battery Disconnect Unit), PDU (Power Distribution Unit), DC/DC (Direct Current), OBC (On Board Charger), PTC (Positive Temperature Coefficient), and the like. BDU is especially designed for the interior of the battery as one type of a high-voltage power distribution box. PDU is a power supply distribution socket for a rack. By electrically connecting high-voltage elements through busbars and wire harness, PDU provides charging and discharging control, power-on control of high-voltage components, protection of short circuit due to overload of circuit, high-voltage sampling, low-voltage control and other functions for a high-voltage system of a new energy automobile, thereby protecting and monitoring operation of the high-voltage system. DC/DC represents an apparatus that converts a DC power supply of a certain voltage level to a DC power supply of another voltage level. PTC is an automobile heater on the vehicle 1.

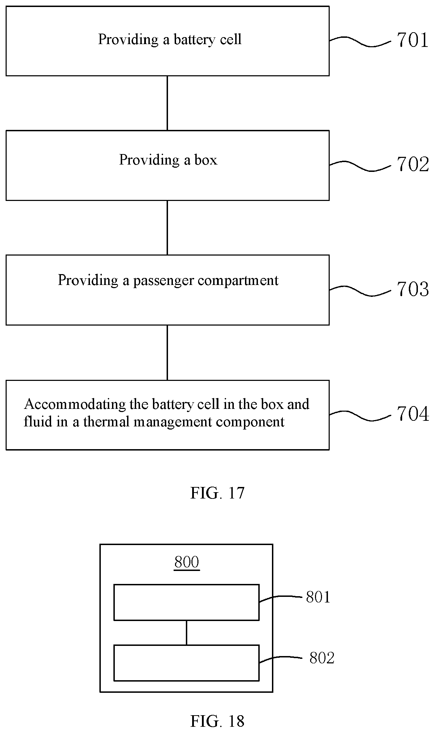

FIG. 17 shows a schematic flow chart of a method for manufacturing a power consumption device provided in one embodiment of the present application. As shown in FIG. 17, the method may include:
701: providing a battery cell 12;
702: providing a passenger compartment 40;
703: providing a box 11, the box 11 comprising a thermal management component 111; and
704: accommodating the battery cell 12 in the box 11, where the thermal management component 111 is configured to accommodate fluid to adjust a temperature for the battery cell 12 and the passenger compartment 40.

FIG. 18 shows a schematic block diagram of an apparatus 800 for manufacturing a power consumption device provided in one embodiment of the present application. As shown in FIG. 18, the apparatus 800 for manufacturing a power consumption device may include a providing module 801 and an assembly module 802.

The providing module 801 is configured for providing a battery cell 12; providing a passenger compartment 40; and providing a box 11, the box 11 comprising a thermal management component 111, where the thermal management component 111 is configured to adjust a temperature for the battery cell 12 and the passenger compartment 40.

The assembly module 802 is configured for accommodating the battery cell 12 in the box 11.

It should be noted that in absence of a conflict, features in the embodiments of the present application may be combined to each other.

The foregoing descriptions are merely preferable embodiments of the present invention, but are not intended to limit the present invention. A person skilled in the art understands that the present application may have various modifications and variations.

## Claims

1. A power consumption device, comprising:
a passenger compartment (40); and
a box (11) for accommodating a battery cell (12), the box (11) comprising a thermal management component (111);
wherein the thermal management component (111) is configured to accommodate fluid to adjust a temperature for the battery cell (12) and the passenger compartment (40);
wherein the thermal management component (111) is configured for a heat conducting connection to the battery cell (12), and the thermal management component (111) is in a heat conducting connection to a compartment wall of the passenger compartment (40) or is formed as a part of the compartment wall so as to simultaneously adjust a temperature for the battery cell (12) and the passenger compartment (40);
**characterized in that**
the box (11) further comprises a box body (112) with an opening, the thermal management component (111) is configured to cover the opening, the box body (112) and the thermal management component (111) enclose a closing chamber, and the closing chamber is configured to accommodate the battery cell (12).

2. The power consumption device according to claim 1, wherein the compartment wall comprises a bottom wall (41) and the thermal management component (111) is at least a part of the bottom wall (41) or the thermal management component (111) is in a heat conducting connection to the bottom wall (41).

3. The power consumption device according to claim 2, wherein the box body is located under the bottom wall (41).

4. The power consumption device according to any one of claims 1-3, wherein the power consumption device further comprises a heating element (60), the heating element (60) being configured to generate heat when the power consumption device is working; and the thermal management component (111) comprises a body portion (1110) and an extrusion portion (1111), the body portion (1110) being configured to enclose the closing chamber with the box body (112), the extrusion portion (1111) being configured to protrude out of a peripheral wall of the box body (112), and the extrusion portion (1111) being attached to the heating element (60) to adjust a temperature for the heating element (60).

5. The power consumption device according to claim 4, wherein the thermal management component (111) further comprises a fixing portion (1113), the fixing portion (1113) is provided at an intersection between the body portion (1110) and the extrusion portion (1111) and extends in a direction perpendicular to the body portion (1110) and/or the extrusion portion (1111), and the thermal management component (111) is connected to a peripheral wall of the box body (112) through the fixing portion (1113).

6. The power consumption device according to claim 5, wherein the peripheral wall of the box body (112) is provided with a groove (1121) corresponding to the fixing portion (1113), and the fixing portion (1113) is configured to be embedded into the groove (1121).

7. The power consumption device according to any one of claims 1-6, wherein the power consumption device is a vehicle (1).

8. The power consumption device according to claim 7, wherein the power consumption device further comprises a frame (50), the frame (50) is located at a bottom of the passenger compartment (40) and the box body (112) is installed on the frame (50) or as a part of the frame (50).

9. The power consumption device according to claim 8, wherein the frame (50) comprises two main cross beams (51), two main longitudinal beams (52) and a base plate (53), and the two main cross beams (51), the two main longitudinal beams (52) and the base plate (53) enclose the box body (112).

10. A method for manufacturing a power consumption device, wherein the method comprises:
providing a battery cell (12);
providing a passenger compartment (40);
providing a box (11), the box (11) comprising a thermal management component (111); and
accommodating the battery cell (12) in the box (11), wherein the thermal management component (111) is configured to accommodate fluid to adjust a temperature for the battery cell (12) and the passenger compartment (40);
wherein the thermal management component (111) is configured for a heat conducting connection to the battery cell (12), and the thermal management component (111) is in a heat conducting connection to a compartment wall of the passenger compartment (40) or is formed as a part of the compartment wall so as to simultaneously adjust a temperature for the battery cell (12) and the passenger compartment (40);
**characterized in that**
the box (11) further comprises a box body (112) with an opening, the thermal management component (111) is configured to cover the opening, the box body (112) and the thermal management component (111) enclose a closing chamber, and the closing chamber is configured to accommodate the battery cell (12).

11. An apparatus for manufacturing a power consumption device (800), comprising
a providing module (801) for
providing a battery cell (12);
providing a passenger compartment (40); and
providing a box (11), the box (11) comprising a thermal management component (111), wherein the thermal management component (111) is configured to adjust a temperature for the battery cell (12) and the passenger compartment (40);
wherein the thermal management component (111) is configured for a heat conducting connection to the battery cell (12), and the thermal management component (111) is in a heat conducting connection to a compartment wall of the passenger compartment (40) or is formed as a part of the compartment wall so as to simultaneously adjust a temperature for the battery cell (12) and the passenger compartment (40);
**characterized in that**
the box (11) further comprises a box body (112) with an opening, the thermal management component (111) is configured to cover the opening, the box body (112) and the thermal management component (111) enclose a closing chamber, and the closing chamber is configured to accommodate the battery cell (12); and
an assembly module (802) for accommodating the battery cell (12) in the box (11).

## Patentansprüche

1. Leistungsverbrauchseinrichtung, die aufweist:
einen Passagierraum (40); und
einen Kasten (11) zum Aufnehmen einer Batteriezelle (12), wobei der Kasten (11) eine Wärmemanagementkomponente (111) aufweist;
wobei die Wärmemanagementkomponente (111) dazu ausgebildet ist, ein Fluid aufzunehmen, um eine Temperatur für die Batteriezelle (12) und den Passagierraum (40) einzustellen;
wobei die Wärmemanagementkomponente (111) für eine wärmeleitende Verbindung zu der Batteriezelle (12) ausgebildet ist und die Wärmemanagementkomponente (111) in einer wärmeleitenden Verbindung mit einer Abteilwand des Passagierraums (40) steht oder als ein Teil der Abteilwand gebildet ist, um gleichzeitig eine Temperatur für die Batteriezelle (12) und den Passagierraum (40) einzustellen;
**dadurch gekennzeichnet, dass**
der Kasten (11) weiterhin einen Kastenkörper (112) mit einer Öffnung aufweist, die Wärmemanagementkomponente (111) dazu ausgebildet ist, die Öffnung abzudecken, der Kastenkörper (112) und die Wärmemanagementkomponente (111) eine Schließkammer umschließen und die Schließkammer dazu ausgebildet ist, die Batteriezelle (12) aufzunehmen.

2. Leistungsverbrauchseinrichtung nach Anspruch 1, wobei die Abteilwand eine Bodenwand (41) aufweist und die Wärmemanagementkomponente (111) zumindest ein Teil der Bodenwand (41) ist oder die Wärmemanagementkomponente (111) in einer wärmeleitenden Verbindung mit der Bodenwand (41) steht.

3. Leistungsverbrauchseinrichtung nach Anspruch 2, wobei der Kastenkörper unterhalb der Bodenwand (41) angeordnet ist.

4. Leistungsverbrauchseinrichtung nach einem der Ansprüche 1-3, wobei die Leistungsverbrauchseinrichtung weiterhin ein Heizelement (60) aufweist, wobei das Heizelement (60) dazu ausgebildet ist, Wärme zu erzeugen, wenn die Leistungsverbrauchseinrichtung arbeitet; und die Wärmemanagementkomponente (111) einen Körperabschnitt (1110) und einen Extrusionsabschnitt (1111) aufweist, wobei der Körperabschnitt (1110) dazu ausgebildet ist, die Schließkammer mit dem Kastenkörper (112) zu umschließen, wobei der Extrusionsabschnitt (1111) dazu ausgebildet ist, aus einer Umfangswand des Kastenkörpers (112) vorzustehen, und wobei der Extrusionsabschnitt (1111) an dem Heizelement (60) angebracht ist, um eine Temperatur für das Heizelement (60) einzustellen.

5. Leistungsverbrauchseinrichtung nach Anspruch 4, wobei die Wärmemanagementkomponente (111) weiterhin einen Befestigungsteil (1113) aufweist, wobei der Befestigungsteil (1113) an einer Kreuzung zwischen dem Körperabschnitt (1110) und dem Extrusionsabschnitt (1111) vorgesehen ist und sich in einer Richtung senkrecht zu dem Körperabschnitt (1110) und/oder dem Extrusionsabschnitt (1111) erstreckt, und wobei die Wärmemanagementkomponente (111) durch den Befestigungsteil (1113) mit einer Umfangswand des Kastenkörpers (112) verbunden ist.

6. Leistungsverbrauchseinrichtung nach Anspruch 5, wobei die Umfangswand des Kastenkörpers (112) mit einer Nut (1121) versehen ist, die mit dem Befestigungsteil (1113) korrespondiert, und der Befestigungsteil (1113) dazu ausgebildet ist, in die Nut (1121) eingebettet zu werden.

7. Leistungsverbrauchseinrichtung nach einem der Ansprüche 1 bis 6, wobei die Leistungsverbrauchseinrichtung ein Verkehrsmittel (1) ist.

8. Leistungsverbrauchseinrichtung nach Anspruch 7, wobei die Leistungsverbrauchseinrichtung weiterhin einen Rahmen (50) aufweist, der Rahmen (50) an einem Boden des Passagierraums (40) angeordnet ist und der Kastenkörper (112) an dem Rahmen (50) oder als ein Teil des Rahmens (50) installiert ist.

9. Leistungsverbrauchseinrichtung nach Anspruch 8, wobei der Rahmen (50) zwei Hauptquerträger (51), zwei Hauptlängsträger (52) und eine Basisplatte (53) aufweist und die beiden Hauptquerträger (51), die beiden Hauptlängsträger (52) und die Basisplatte (53) den Kastenkörper (112) umschließen.

10. Verfahren zum Herstellen einer Leistungsverbrauchseinrichtung, wobei das Verfahren aufweist:
Bereitstellen einer Batteriezelle (12);
Bereitstellen eines Passagierraums (40);
Bereitstellen eines Kastens (11), wobei der Kasten (11) eine Wärmemanagementkomponente (111) aufweist; und
Unterbringen der Batteriezelle (12) in dem Kasten (11), wobei die Wärmemanagementkomponente (111) dazu ausgebildet ist, ein Fluid aufzunehmen, um eine Temperatur für die Batteriezelle (12) und den Passagierraum (40) einzustellen;
wobei die Wärmemanagementkomponente (111) für eine wärmeleitende Verbindung mit der Batteriezelle (12) ausgebildet ist und die Wärmemanagementkomponente (111) in einer wärmeleitenden Verbindung mit einer Abteilwand des Passagierraums (40) steht oder als ein Teil der Abteilwand gebildet ist, um gleichzeitig eine Temperatur für die Batteriezelle (12) und den Passagierraum (40) einzustellen;
**dadurch gekennzeichnet, dass**
der Kasten (11) weiterhin einen Kastenkörper (112) mit einer Öffnung aufweist, die Wärmemanagementkomponente (111) dazu ausgebildet ist, die Öffnung abzudecken, der Kastenkörper (112) und die Wärmemanagementkomponente (111) eine Schließkammer einschließen und die Schließkammer dazu ausgebildet ist, die Batteriezelle (12) aufzunehmen.

11. Vorrichtung zum Herstellen einer Leistungsverbrauchseinrichtung (800), die ein Bereitstellungsmodul (801) zum Bereitstellen einer Batteriezelle (12), Bereitstellen eines Passagierraums (40) und ein Bereitstellen eines Kastens (11) aufweist, wobei der Kasten (11) eine Wärmemanagementkomponente (111) aufweist, wobei die Wärmemanagementkomponente (111) dazu ausgebildet ist, eine Temperatur für die Batteriezelle (12) und den Passagierraum (40) einzustellen;
wobei die Wärmemanagementkomponente (111) für eine wärmeleitende Verbindung zu der Batteriezelle (12) ausgebildet ist, und die Wärmemanagementkomponente (111) in einer wärmeleitenden Verbindung mit einer Abteilwand des Passagierraums (40) steht oder als ein Teil der Abteilwand gebildet ist, um gleichzeitig eine Temperatur für die Batteriezelle (12) und den Passagierraum (40) einzustellen;
**dadurch gekennzeichnet, dass**
der Kasten (11) weiterhin einen Kastenkörper (112) mit einer Öffnung aufweist, die Wärmemanagementkomponente (111) dazu ausgebildet ist, die Öffnung abzudecken, der Kastenkörper (112) und die Wärmemanagementkomponente (111) eine Schließkammer einschließen, und die Schließkammer dazu ausgebildet ist, die Batteriezelle (12) aufzunehmen; und
ein Baugruppenmodul (802) zum Aufnehmen der Batteriezelle (12) in dem Kasten (11).

## Revendications

1. Dispositif de consommation d'énergie comprenant :
un compartiment passager (40) ; et
une boîte (11) pour loger une cellule de batterie (12), la boîte (11) comprenant un composant de gestion thermique (111) ; dans lequel le composant de gestion thermique (111) est configuré pour loger du fluide afin d'ajuster une température pour la cellule de batterie (12) et le compartiment passager (40) ;
dans lequel le composant de gestion thermique (111) est configuré pour une connexion thermoconductrice avec la cellule de batterie (12), et le composant de gestion thermique (111) est dans une connexion thermoconductrice avec une paroi de compartiment du compartiment passager (40) ou est formé comme une partie de la paroi de compartiment de sorte à ajuster simultanément une température pour la cellule de batterie (12) et le compartiment passager (40) ;
**caractérisé en ce que**
la boîte (11) comprend en outre un corps de boîte (112) avec une ouverture, le composant de gestion thermique (111) est configuré pour couvrir l'ouverture, le corps de boîte (112) et le composant de gestion thermique (111) renferment une chambre de fermeture, et la chambre de fermeture est configurée pour loger la cellule de batterie (12).

2. Dispositif de consommation d'énergie selon la revendication 1, dans lequel la paroi de compartiment comprend une paroi inférieure (41) et le composant de gestion thermique (111) est au moins une partie de la paroi inférieure (41) ou le composant de gestion thermique (111) est dans une connexion thermoconductrice avec la paroi inférieure (41).

3. Dispositif de consommation d'énergie selon la revendication 2, dans lequel le corps de boîte est situé sous la paroi inférieure (41).

4. Dispositif de consommation d'énergie selon l'une quelconque des revendications 1 à 3, dans lequel le dispositif de consommation d'énergie comprend en outre un élément de chauffage (60), l'élément de chauffage (60) étant configuré pour générer de la chaleur lorsque le dispositif de consommation d'énergie travaille ; et le composant de gestion thermique (111) comprend une portion de corps (1110) et une portion d'extrusion (1111), la portion de corps (1110) étant configuré pour renfermer la chambre de fermeture avec le corps de boîte (112), la portion d'extrusion (1111) étant configurée pour faire saillie d'une paroi périphérique du corps de boîte (112), et la portion d'extrusion (1111) étant attachée à l'élément de chauffage (60) afin d'ajuster une température pour l'élément de chauffage (60).

5. Dispositif de consommation d'énergie selon la revendication 4, dans lequel le composant de gestion thermique (111) comprend en outre une portion de fixation (1113), la portion de fixation (1113) est prévue à une intersection entre la portion de corps (1110) et la portion d'extrusion (1111) et s'étend dans une direction perpendiculaire à la portion de corps (1110) et/ou la portion d'extrusion (1111), et le composant de gestion thermique (111) est connecté à une paroi périphérique du corps de boîte (112) à travers la portion de fixation (1113).

6. Dispositif de consommation d'énergie selon la revendication 5, dans lequel la paroi périphérique du corps de boîte (112) est dotée d'une rainure (1121) correspondant à la portion de fixation (1113), et la portion de fixation (1113) est configurée pour être intégrée dans la rainure (1121).

7. Dispositif de consommation d'énergie selon l'une quelconque des revendications 1 à 6, dans lequel le dispositif de consommation d'énergie est un véhicule (1).

8. Dispositif de consommation d'énergie selon la revendication 7, dans lequel le dispositif de consommation d'énergie comprend en outre un cadre (50), le cadre (50) est situé au niveau d'un fond du compartiment passager (40) et le corps de boîte (112) est installé sur le cadre (50) ou comme une partie du cadre (50).

9. Dispositif de consommation d'énergie selon la revendication 8, dans lequel le cadre (50) comprend deux traverses principales (51), deux longerons principaux (52) et une plaque de base (53), et les deux traverses principales (51), les deux longerons principaux (52) et la plaque de base (53) renferment le corps de boîte (112).

10. Procédé de fabrication d'un dispositif de consommation d'énergie, dans lequel le procédé comprend :
la fourniture d'une cellule de batterie (12) ;
la fourniture d'un compartiment passager (40) ;
la fourniture d'une boîte (11), la boîte (11) comprenant un composant de gestion thermique (111) ; et
le logement de la cellule de batterie (12) dans la boîte (11), dans lequel le composant de gestion thermique (111) est configuré pour loger du fluide afin d'ajuster une température pour la cellule de batterie (12) et le compartiment passager (40) ;
dans lequel le composant de gestion thermique (111) est configuré pour une connexion thermoconductrice avec la cellule de batterie (12), et le composant de gestion thermique (111) est dans une connexion thermoconductrice avec une paroi de compartiment du compartiment passager (40) ou est formé comme une partie de la paroi de compartiment de sorte à ajuster simultanément une température pour la cellule de batterie (12) et le compartiment passager (40) ;
**caractérisé en ce que**
la boîte (11) comprend en outre un corps de boîte (112) avec une ouverture, le composant de gestion thermique (111) est configuré pour couvrir l'ouverture, le corps de boîte (112) et le composant de gestion thermique (111) renferment une chambre de fermeture, et la chambre de fermeture est configurée pour loger la cellule de batterie (12).

11. Appareil de fabrication d'un dispositif de consommation d'énergie (800), comprenant :
un module de fourniture (801) pour
la fourniture d'une cellule de batterie (12) ;
la fourniture d'un compartiment passager (40) ; et
la fourniture d'une boîte (11), la boîte (11) comprenant un composant de gestion thermique (111), dans lequel le composant de gestion thermique (111) est configuré pour ajuster une température pour la cellule de batterie (12) et le compartiment passager (40) ;
dans lequel le composant de gestion thermique (111) est configuré pour une connexion thermoconductrice avec la cellule de batterie (12), et le composant de gestion thermique (111) est dans une connexion thermoconductrice avec une paroi de compartiment du compartiment passager (40) ou est formé comme une partie de la paroi de compartiment de sorte à ajuster simultanément une température pour la cellule de batterie (12) et le compartiment passager (40) ;
**caractérisé en ce que**
la boîte (11) comprend en outre un corps de boîte (112) avec une ouverture, le composant de gestion thermique (111) est configuré pour couvrir l'ouverture, le corps de boîte (112) et le composant de gestion thermique (111) renferment une chambre de fermeture, et la chambre de fermeture est configurée pour loger la cellule de batterie (12) ; et
un module d'assemblage (802) pour loger la cellule de batterie (12) dans la boîte (11).
